# EUROPÄISCHE PATENTSCHRIFT

(11) **EP 1 762 827 B1**
(45) Veröffentlichungstag und Bekanntmachung des Hinweises auf die Patenterteilung: **03.09.2008**
(21) Anmeldenummer: 06011444.4
(22) Anmeldetag: 02.06.2006
(51) Int. Cl.: G01D 5/347, G01D 5/26

(54) **Abtasteinheit einer optischen Positionsmesseinrichtung und optische Positionsmesseinrichtung**
Scanning unit of an optical position measuring device and optical position measuring device
Unité de balayage destinée à un dispositif de mesure de position optique et dispositif de mesure de position optique

(30) Priorität: 13.09.2005 DE 102005043433
(43) Veröffentlichungstag der Anmeldung: 14.03.2007
(73) Patentinhaber: Dr. Johannes Heidenhain GmbH, 83301 Traunreut (DE)
(72) Erfinder: Martin, Barbara, 83301 Traunreut (DE); Schenk, Oliver, 83349 Palling (DE)

(56) Entgegenhaltungen:
- EP-A2- 0 120 205
- DE-U1- 9 321 307
- GB-A- 2 167 863
- US-A- 5 528 934

## Beschreibung

Die Erfindung betrifft eine Abtasteinheit einer optischen Positionsmesseinrichtung nach dem Oberbegriff des Anspruchs 1 sowie eine optische Positionsmesseinrichtung nach dem Oberbegriff des Anspruchs 6.

Optische Positionsmesseinrichtungen dienen zur Messung von Längen und Winkeln. Sie werden insbesondere bei Bearbeitungsmaschinen zur Messung der Relativbewegung eines Werkzeugs bezüglich eines zu bearbeitenden Werkstücks, bei Robotern, Koordinatenmessmaschinen und vermehrt auch in der Halbleiterindustrie eingesetzt.

Um Messfehler zu vermeiden, sollte der Lichtstrahlengang der optischen Abtastung von Umgebungsmedien ungestört sein. Hierzu wird der Maßstab und die Abtasteinheit bei bekannten Positionsmesseinrichtungen in einem Gehäuse angeordnet, wie beispielsweise in der GB 2 167 863 A angegeben. Das Gehäuse weist einen durch elastische Dichtlippen verschlossenen Schlitz auf, durch den ein Mitnehmer für die Abtasteinheit hindurchgreift. Ein derartiges Gehäuse kann das Eindringen von Umgebungsmedien nicht vollständig verhindern. Darüber hinaus wird vielfach die Abtasteinheit über Führungselemente am Maßstab und/oder am Gehäuse in Messrichtung geführt. Diese Führungselemente sind Roll- oder Gleitelemente, die sich am Maßstab und/oder am Gehäuse abstützen, dabei kann durch Reibung zwischen Maßstab bzw. Gehäuse und den Führungselementen innerhalb des Gehäuses Staub entstehen, der den Lichtstrahlengang der Abtastung stört.

Gemäß der GB 2 167 863 A ist im Gehäuse eine Öffnung mit einem Filter vorgesehen, wobei der Filter Öl vom Innenraum nach außen entweichen lässt, aber Staub nicht eindringen lässt. Durch diesen Filter wird die Abtastung selbst nicht geschützt.

Zur Erhöhung der Dichtwirkung wird in der DE 93 21 307 U1 ein Druckluftkanal vorgeschlagen, durch den Druckluft in das Geäuseinnere eingespeist wird, wobei der Kanal derart ausgebildet ist, dass eine schnelle Temperaturanpassung der Druckluft an die Temperatur des Gehäuses erfolgt.

Ein Schutz der Abtastung ist dadurch nicht gewährleistet.

Um negative. Einflüsse auf die Abtastung auszuschalten, ist die Abtasteinheit gemäß der EP 0 120 205 B1 hermetisch verschlossen.

Nachteilig bei einem hermetischen Verschluss ist die Möglichkeit der Bildung von kondensierter Flüssigkeit auf optischen Oberflächen im hermetisch verschlossenen Innenraum bei Temperaturänderungen.

Die Verwendung eines staubdichten, aber gas- und dampfdurchlässigen Filters zum Schutz des Innenraums eines Anzeigeinstrumentes wird in der US 5 528 934 A beschrieben.

Der Erfindung liegt die Aufgabe zugrunde, eine Abtasteinheit einer optischen Positionsmesseinrichtung derart auszubilden, dass der Lichtstrahlengang der Abtastung möglichst ungestört bleibt.

Diese Aufgabe wird erfindungsgemäß durch die Merkmale des Anspruchs 1 gelöst.

Weiterhin soll eine optische Positionsmesseinrichtung geschaffen werden, die zuverlässig arbeitet.

Diese Aufgabe wird durch die Merkmale des Anspruchs 6 gelöst.

Die mit der Erfindung erzielten Vorteile bestehen darin, dass die Positionsmesseinrichtung auch unter ungünstigen Bedingungen ohne Beeinträchtigung des Lichtstrahlengangs der Abtastung einsetzbar ist, da dieser nicht durch Staub gestört werden kann und die sich im gekapselten Innenraum gegebenenfalls befindliche Feuchtigkeit trotzdem entweichen kann.

In den abhängigen Ansprüchen sind vorteilhafte Ausgestaltungen der Erfindung angegeben.

Die Erfindung wird mit Hilfe eines Ausführungsbeispiels näher erläutert.

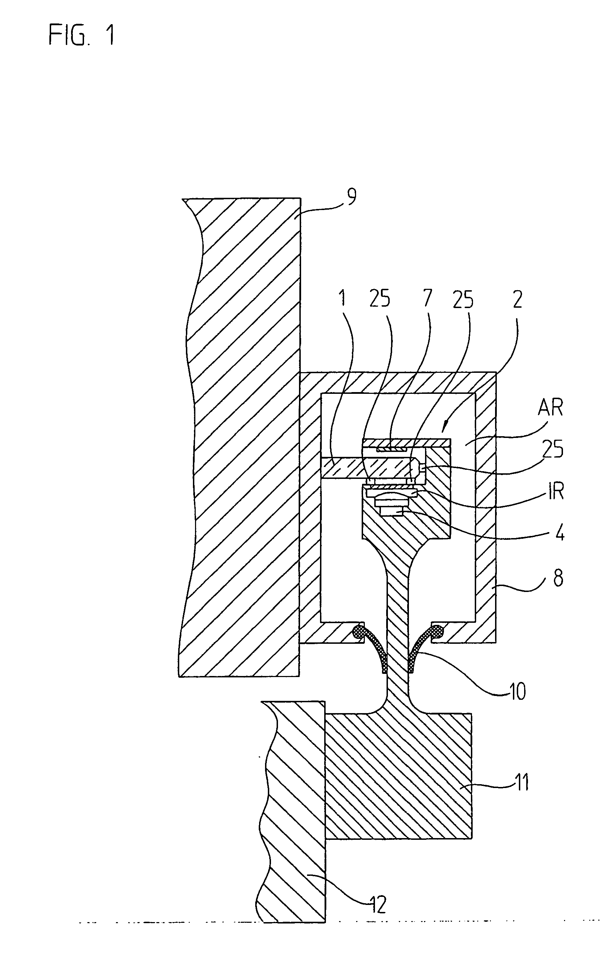

Dabei zeigt
- Figur 1: einen Querschnitt einer optischen Positionsmesseinrichtung;
- Figur 2: einen Längsschnitt der Positionsmesseinrichtung gemäß Figur 1;
- Figur 3: eine Detailansicht aus Figur 2 und

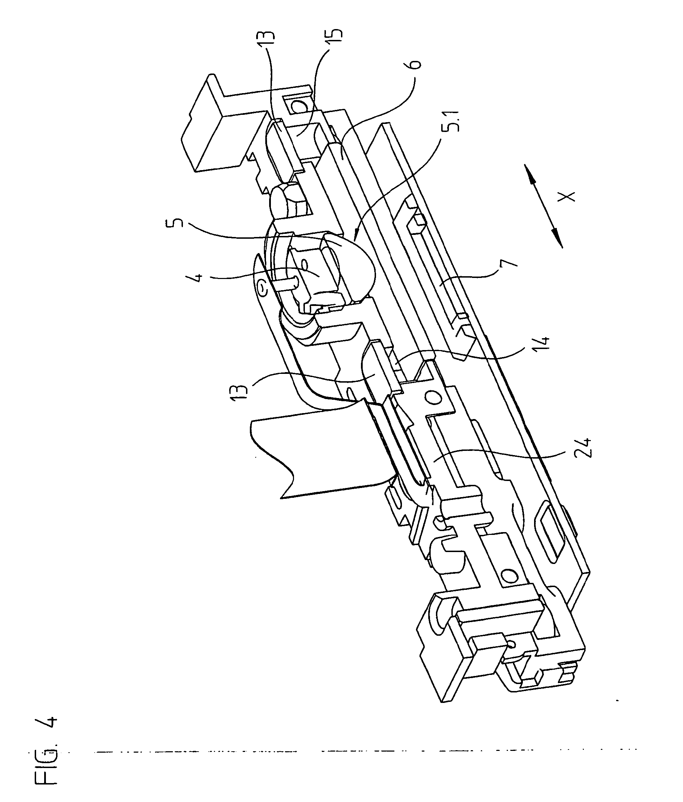

- Figur 4: eine perspektivische Schnittdarstellung der Abtasteinheit der Positionsmesseinrichtung.

Die Erfindung ist am Beispiel einer Längenmesseinrichtung dargestellt, bei der ein transparenter Maßstab 1 von einer relativ zum Maßstab 1 in Messrichtung X bewegbaren Abtasteinheit 2 abgetastet wird. Der Maßstab 1 weist eine Messteilung 3 auf, die von der Abtasteinheit 2 im Durchlicht abgetastet wird. Dazu umfasst die Abtasteinheit 2 eine Lichtquelle 4, die ein Lichtbündel L aussendet, welches von einer Linse 5 kollimiert wird und weiter durch eine transparente Abtastplatte 6 auf den Maßstab 1 trifft. Das Lichtbündel L wird von der Messteilung 3 am Maßstab 1 positionsabhängig moduliert und trifft auf einen Detektor 7.

Der Maßstab 1 ist innerhalb eines Gehäuses 8 angeordnet, welches wiederum an einem zu messenden Objekt 9, beispielsweise einem Maschinenbett einer Werkzeugmaschine befestigt ist. Das Gehäuse 8 weist in seiner Längsrichtung in Messrichtung X verlaufend einen Schlitz auf, der durch dachförmig geneigte Dichtlippen 10 verschlossen ist, durch die ein Mitnehmer 11 mit einem schwertförmigen Mittelstück hindurchgreift. Der Mitnehmer 11 ist an einem relativ zum Maschinenbett 8 verschiebbaren Schlitten 12 der Werkzeugmaschine befestigt.

Um zu verhindern, dass störende Medien - insbesondere Stäube - das Lichtbündel L stören, ist ein das Lichtbündel L durchlaufender Innenraum IR der Abtasteinheit 2 gegenüber einem Außenraum AR abgeschlossen. Dieser Innenraum IR wird - in Richtung des Lichtbündels L betrachtet - einerseits von der Linse 5 begrenzt und weiter in Richtung des Lichtbündels L von der Abtastplatte 6 begrenzt. Von der Linse 5 und der Abtastplatte 6 befindet sich jeweils eine optische Oberfläche 5.1, 6.1 im Innenraum IR und eine optische Oberfläche 6.2 außerhalb. Die im Innenraum IR liegende optische Oberfläche 5.1 der Linse 5 und optische Oberfläche 6.1 der Abtastplatte 6 sind somit vor Staubablagerungen geschützt.

Um die Bildung von Kondensat an diesen Oberflächen 5.1 und 6.1 zu verhindern, ist der Innenraum IR gegenüber dem Außenraum AR nicht hermetisch gasdicht abgeschlossen, sondern nur staubdicht, aber gasdurchlässig und wasserdampfdurchlässig. Hierzu ist als Verbindung zwischen dem Innenraum IR und dem Außenraum AR ein Filter 13 angeordnet, der staubdicht aber gas- und dampfdurchlässig ausgeführt ist. Der Filter 13 ist ein Porenfilter mit Poren, die keinen Staub vom Außenraum AR in den Innenraum IR durchlassen, aber möglichst viel Feuchtigkeit vom Innenraum IR in den Außenraum AR durchlassen und abführen.

Der Filter 13 ist beispielsweise aus einem Sintermaterial, wie Keramik, Edelstahl oder Messing mit einer Porengröße von einigen µm oder aus Glasfasermaterial bzw. Textilfasern (GORETEX) mit einer Porengröße bis unter 1 µm. Die Größe und Anordnung der Poren des Filters 13 ist vorzugsweise so gewählt, dass sie Wasserdampf durchlassen, nicht aber Wasser in flüssiger Form sowie Stäube.

Das von der Lichtquelle 4 ausgehende Lichtbündel wird beim Auftreffen auf die Abtastplatte 6 von einer zumindest ein Fenster bildenden elektrisch leitenden opaken Schicht 20 begrenzt. Diese opake Schicht 20 begrenzt das Fenster und bildet somit eine Blende, zusätzlich bildet die elektrisch leitende opake Schicht 20 ein Abtastgitter innerhalb des Fensters, das in bekannter Weise aus abwechselnd nebeneinander angeordneten opaken Bereichen der Schicht 20 und transparenten Bereichen besteht. Das Abtastgitter dient zur Bildung mehrerer Teilstrahlenbündel, die mit der Messteilung 3 des Maßstabs 1 wechselwirken und auf den Detektor 7 zur Erzeugung von positionsabhängigen, gegeneinander phasenverschobenen Abtastsignalen treffen.

Die Abtastplatte 6 hat zwei zueinander parallel verlaufende und einander gegenüberliegende Oberflächen 6.1 und 6.2. Eine dieser Oberflächen 6.2 ist dem Maßstab 1 gegenüberliegend zugewandt und verläuft parallel zur abzutastenden, die Messteilung 3 tragenden Oberfläche des Maßstabs 1. Diese Oberfläche 6.2 liegt im Außenraum AR und wird nachfolgend erste Oberfläche 6.2 genannt. Die zweite Oberfläche 6.1 liegt geschützt im Innenraum IR und ist dem Maßstab 1 abgewandt angeordnet.

Die das Fenster bildende elektrisch leitende opake Schicht 20 ist auf der ersten Oberfläche 6.2 aufgebracht. Dabei ist die Abtastplatte 6 aus elektrisch isolierendem transparentem Material, insbesondere Glas und die Schicht 20 eine Metallschicht, insbesondere Chrom.

Die Abtastplatte 6 weist einen bezüglich der ersten Oberfläche 6.2 zurückgesetzten Oberflächenbereich 21 auf, der ebenfalls elektrisch leitend beschichtet ist. Diese elektrisch leitende Beschichtung 22 wird vorzugsweise von der opaken Schicht 20 einstückig gebildet, sie kann aber auch eine separate mit der Schicht 20 elektrisch verbundene Beschichtung sein, welche zumindest partiell unter oder über der Schicht 20 verläuft. Der als zurückgesetzt bezeichnete Oberflächenbereich 21 der Abtastplatte 6 ist vom Maßstab 1 weiter entfernt, als die parallel zum Maßstab 1 verlaufende Oberfläche 10. Der Abstand zwischen dem Maßstab 1 und der ersten Oberfläche 6.2 der Abtastplatte 6 beträgt einige µm.

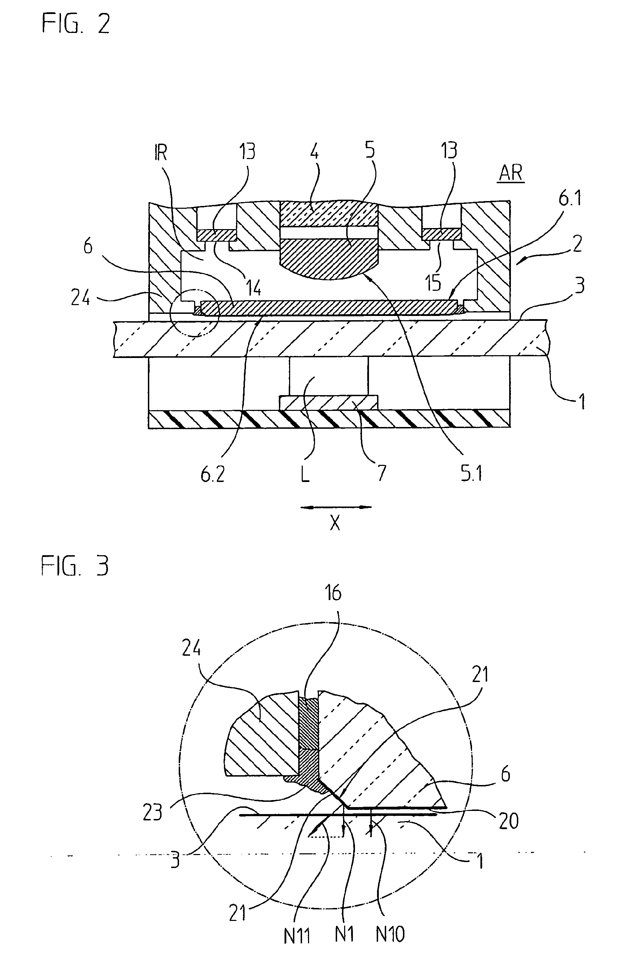

Die Beschichtung 22 ist am zurückgesetzten Oberflächenbereich 21 über ein Kontaktelement 23 an einem ein Bezugspotential 0V aufweisenden elektrisch leitenden Körper 24 kontaktiert. Ein Beispiel dieser Kontaktierung ist in Figur 3 im Detail dargestellt. Die Beschichtung 22 am zurückgesetzten Oberflächenbereich 21 - also an der Fase - ist eine Fortführung der Schicht 20. Das Kontaktelement ist ein elektrisch leitender Klebstoff 23, insbesondere Silberleitkleber, der so eingebracht ist, dass er die Schicht 20 auf der ersten Oberfläche 6.2 in Richtung hin zum Maßstab 1 betrachtet nicht überragt, vorteilhafter Weise auch die erste Oberfläche 6.2 nicht überragt.

Der elektrisch leitende Körper ist ein Abtastwagen 24, der über Kugellager 25 am Maßstab 1 in Messrichtung X geführt wird. Der Abtastwagen 24 besteht beispielsweise aus leitfähigem Kunststoff, insbesondere aus Polycarbonat mit Kohlefaserverstärkung und ist über eine elektrische Verbindung am Bezugspotential 0V angeschlossen.

Der zurückgesetzte Oberflächenbereich 21 verläuft in Bezug auf die erste Oberfläche 6.2 derart, dass er einen Normalenvektor N11 besitzt, der eine Richtungskomponente N1 aufweist, die dem Normalenvektor N10 der ersten Oberfläche 6.2 der Abtastplatte 6 entspricht. Der Oberflächenbereich 21 ist hierbei gegenüber der ersten Oberfläche 6.2 geneigt, er weist insbesondere einen Neigungswinkel von 45° ± 20° auf. Dies hat den Vorteil, dass der Oberflächenbereich 21 mit einfachen Werkzeugen durch Materialabtrag fertigbar ist, und dass der Oberflächenbereich 21 von der gleichen Richtung aus, wie die erste Oberfläche 6.2 beschichtet (bedampft, gesputtert) werden kann.

Zur langzeitstabilen Fixierung der Abtastplatte 6 ist es oft notwendig zusätzlich zum Kontaktelement 23 weitere Maßnahmen vorzusehen. Im dargestellten Beispiel wird die Abtastplatte 6 in einer Öffnung des Abtastwagens 24 durch Klebstoff 16 fixiert. Dieser Klebstoff 16 wird vom Innenraum IR her, also von der Oberfläche 6.1 der Abtastplatte 6 her eingebracht. Hierzu sind im Abtastwagen 24 Montageöffnungen 14, 15 vorgesehen, durch die der Klebstoff 16 vom Außenraum AR in den Innenraum IR des Abtastwagens 24 einbringbar ist. Der Innenraum IR ist ein Hohlraum des Abtastwagens 24, und in die Montageöffnungen 14 und 24 sind die Filter 13 eingebracht, beispielsweise eingeklebt.

In dem beschriebenen Ausführungsbeispiel, bei dem der Maßstab 1 vom Lichtbündel L durchstrahlt wird, befindet sich der Detektor 7 außerhalb des abgeschlossenen Innenraums IR (Hohlraum) der Abtasteinheit 2. Wird die Erfindung bei einer Positionsmesseinrichtung eingesetzt, bei der der Maßstab reflektierend ausgebildet ist und sich der Detektor 7 auf der gleichen Seite wie die Lichtquelle 4, die Linse 5 und die Abtastplatte 6 befindet, ist in vorteilhafter Weise auch der Detektor 7 im abgeschlossenen Innenraum der Abtasteinheit 2 angeordnet.

## Patentansprüche

1. Abtasteinheit einer optischen Positionsmesseinrichtung mit einer Lichtquelle (4) zur Beleuchtung eines Maßstabs (1) mittels eines Lichtbündels (L) und mit einem Detektor (7) zur Detektion des vom Maßstab (1) positionsabhängig modulierten Lichtbündels (L), wobei ein Innenraum (IR) der Abtasteinheit (2) in welchem das Lichtbündel (L) verläuft gegenüber einem Außenraum (AR) staubdicht abgeschlossen ist, und der Innenraum (IR) von transparenten Körpern (5, 6) abgeschlossen ist, durch welchen das Lichtbündel (L) hindurchtritt, indem es durch einen der transparenten Körpern (5) eintritt und durch den anderen der transparenten Körpern (6) austritt, **dadurch gekennzeichnet, dass** der Innenraum (IR) mit dem Außenraum (AR) über ein Filter (13) verbunden ist, der staubdicht, aber gas- und dampfdurchlässig ist.

2. Abtasteinheit nach Anspruch 1, **dadurch gekennzeichnet, dass** der Filter (13) für Wasser in flüssiger Form undurchlässig ist.

3. Abtasteinheit nach Anspruch 1 oder 2, **dadurch gekennzeichnet, dass** der Filter (13) aus einem porösem Material besteht.

4. Abtasteinheit nach Anspruch 3, **dadurch gekennzeichnet, dass** der Filter (13) aus Sintermaterial besteht.

5. Abtasteinheit nach einem der vorhergehenden Ansprüche, **dadurch gekennzeichnet, dass** der Innenraum (IR) vom Lichtbündel (L) durchstrahlt wird, und dass er von einer Seite von einer Linse (4) als der transparente Körper und auf der anderen Seite von einer Abtastplatte (6) als der andere transparente Körper begrenzt ist.

6. Positionsmesseinrichtung zum Messen der Relativlage zweier Objekte (9, 12) mit einem Maßstab (1) und einer relativ zum Maßstab (1) in Messrichtung (X) bewegbaren Abtasteinheit (2) mit einer Lichtquelle (4) zur Beleuchtung des Maßstabs (1) mittels eines Lichtbündels (L) und mit einem Detektor zur Detektion des vom Maßstab (1) positionsabhängig modulierten Lichtbündels (L), wobei ein Innenraum (IR) der Abtasteinheit (2) in welchem das Lichtbündel (L) verläuft gegenüber einem Außenraum (AR) der Abtasteinheit (2) staubdicht abgeschlossen ist, und der Innenraum (IR) von transparenten Körpern (5, 6) abgeschlossen ist, durch welchen das Lichtbündel (L) hindurchtritt, indem es durch einen der transparenten Körpern (5) eintritt und durch den anderen der transparenten Körpern (6) austritt, **dadurch gekennzeichnet, dass** der Innenraum (IR) mit dem Außenraum (AR) über einen Filter (13) verbunden ist, der staubdicht, aber gas- und dampfdurchlässig ist.

7. Positionsmesseinrichtung nach Anspruch 6, **dadurch gekennzeichnet, dass** der Innenraum (IR) vom Lichtbündel (L) durchlaufen wird, und dass der Innenraum (IR) von einer dem Maßstab (1) beabstandet gegenüberliegend angeordneten Abtastplatte (6) begrenzt ist, durch welche das Lichtbündel (L) auf den Maßstab (1) trifft.

8. Positionsmesseinrichtung nach Anspruch 6 oder 7, **dadurch gekennzeichnet, dass** sich die Abtasteinheit (2) über Führungselemente (25) am Maßstab (1) abstützt.

9. Positionsmesseinrichtung nach Anspruch 8, **dadurch gekennzeichnet, dass** der Maßstab (1) und die Abtasteinheit (2) innerhalb eines Gehäuses (8) angeordnet sind, wobei der Hohlraum des Gehäuses (8) der Außenraum (AR) der Abtasteinheit (2) ist.

10. Positionsmesseinrichtung nach Anspruch 9, **dadurch gekennzeichnet, dass** das Gehäuse (8) an einem der zu messenden Objekte (9) befestigbar ist, und eine mit elastischen Dichtelementen (10) verschlossene Öffnung aufweist, durch die ein Mitnehmer (11) für die Abtasteinheit (2) hindurchgreift, wobei der Mitnehmer (11) mit dem anderen der zu messenden Objekte (12) verbindbar ist.

## Claims

1. Scanning unit of an optical position measuring device with a light source (4) for illuminating a scale (1) by means of light beam (L) and with a detector (7) for detecting the light beam (L) modulated by the scale (1) depending on the position of said beam, an inner compartment (IR) of the scanning unit (2) in which the light beam (L) extends being closed off in a dust-tight manner from an outer compartment (AR), and the inner compartment (IR) being closed off by transparent bodies (5, 6), through which the light beam (L) passes, entering through one of the transparent bodies (5) and exiting through the other transparent body (6), **characterised in that** the inner compartment (IR) is connected to the outer compartment (AR) via a filter (13) which is dust-tight but gas-permeable and vapour-permeable.

2. Scanning unit according to claim 1, **characterised in that** the filter (13) is impervious to water in fluid form.

3. Scanning unit according to either claim 1 or claim 2, **characterised in that** the filter (13) is made of a porous material.

4. Scanning unit according to claim 3, **characterised in that** the filter (13) is made of a sintered material.

5. Scanning unit according to any one of the preceding claims, **characterised in that** the light beam (L) radiates through the inner compartment (IR), and **in that** said inner compartment (IR) is delimited on one side by a lens (4) as the transparent body and is delimited on the other side by a scanning plate (6) as the other transparent body.

6. Position measuring device for measuring the relative position of two objects (9, 12) with a scale (1) and a scanning unit (2) which can be moved relative to the scale (1) in a measuring direction (X) and comprises a light source (4) for illuminating the scale (1) by means of a light beam (L) and comprises a detector for detecting the light beam (L) modulated by the scale (1) depending on the position of said beam, an inner compartment (IR) of the scanning unit (2) in which the light beam (L) extends being closed off in a dust-tight manner from an outer compartment (AR) of the scanning unit (2), and the inner compartment (IR) being closed off by transparent bodies (5, 6), through which the light beam (L) passes, entering through one of the transparent bodies (5) and exiting through the other transparent body (6), **characterised in that** the inner compartment (IR) is connected to the outer compartment (AR) via a filter (13) which is dust-tight but gas-permeable and vapour-permeable.

7. Position measuring device according to claim 6, **characterised in that** the light beam (L) passes through the inner compartment (IR), and **in that** the inner compartment (IR) is delimited by a scanning plate (6) which is arranged at a distance from and opposing the scale (1), through which scanning plate the light beam (L) strikes the scale (1).

8. Position measuring device according to either claim 6 or claim 7, **characterised in that** the scanning unit (2) is supported at the scale (1) via guiding elements (25).

9. Position measuring device according to claim 8, **characterised in that** the scale (1) and the scanning unit (2) are arranged inside a housing (8), the hollow space in the housing (8) being the outer compartment (AR) of the scanning unit (2).

10. Position measuring device according to claim 9, **characterised in that** the housing (8) can be fixed to one of the objects (9) to be measured and comprises an opening which is closed with resilient sealing bodies (10), through which opening a carrier (11) for the scanning unit (2) penetrates fully, the carrier (11) being connectable to the other object (12) to be measured.

## Revendications

1. Unité de palpage pour un dispositif de mesure de position comportant une source de lumière (4) pour éclairer une règle graduée (1) au moyen d'un faisceau lumineux (L) et un détecteur (7) pour détecter le faisceau lumineux (L) modulé par la règle graduée (1) en fonction de la position, une chambre intérieure (IR) de l'unité de palpage (2) dans laquelle le faisceau lumineux (L) se propage étant fermée de manière étanche à la poussière vis-à-vis d'une chambre extérieure (AR), la chambre intérieure (IR) étant fermée par des corps transparents (5, 6) que traverse le faisceau lumineux (L), ledit faisceau lumineux entrant au travers de l'un des corps transparents (5) et ressortant au travers de l'autre corps transparent (6), **caractérisée en ce que** la chambre intérieure (IR) communique avec la chambre extérieure (AR) par l'intermédiaire d'un filtre (13) qui est étanche à la poussière, mais est perméable au gaz et à la vapeur d'eau.

2. Unité de palpage selon la revendication 1, **caractérisée en ce que** le filtre (13) qui est étanche à l'eau sous sa forme liquide.

3. Unité de palpage selon la revendication 1 ou 2, **caractérisée en ce que** le filtre (13) est réalisé en un matériau poreux.

4. Unité de palpage selon la revendication 1 ou 2, **caractérisée en ce que** le filtre (13) est réalisé en un matériau fritté.

5. Unité de palpage selon une des revendications précédentes, **caractérisée en ce que** la chambre intérieure (IR) est traversée par le faisceau lumineuux (L) et est délimitée d'un côté par une lentille (4) en tant que corps transparent et de l'autre côté par une plaque de palpage (6) en en tant que deuxième corps transparent.

6. Dispositif de mesure de position pour la mesure de la position relative de deux objets (9, 12), comportant une règle graduée (1) et une unité de palpage (2) déplaçable par rapport à la règle graduée (1) dans la direction de mesure (X), avec une source de lumière (4) pour éclairer la règle graduée (1) au moyen d'un faisceau lumineux (L) et avec un détecteur pour détecter le faisceau lumineux (L) modulé par la règle graduée (1) en fonction de la position, une chambre intérieure (IR) de l'unité de palpage (2) dans laquelle le faisceau lumineux (L) se propage étant fermée de manière étanche à la poussière vis-à-vis d'une chambre extérieure (AR) de l'unité de palpage (1), la chambre intérieure (IR) étant fermée par des corps transparents (5, 6) que traverse le faisceau lumineux (L), ledit faisceau lumineux entrant au travers de l'un des corps transparents (5) et ressortant au travers de l'autre corps transparent (6), **caractérisé en ce que** la chambre intérieure (IR) communique avec la chambre extérieure (AR) par l'intermédiaire d'un filtre (13) qui est étanche à la poussière, mais est perméable au gaz et à la vapeur d'eau.

7. Dispositif de mesure de position selon la revendication 6, **caractérisé en ce que** la chambre intérieure (IR) est traversée par le faisceau lumineux (L) et que ladite chambre intérieure (IR) est délimitée par une plaque de palpage (6) disposée en vis-à-vis de la règle graduée (1), à distance de celle-ci, à travers laquelle le faisceau lumineux (L) atteint la règle graduée (1).

8. Dispositif de mesure de position selon la revendication 6 ou 7, **caractérisé en ce que** l'unité de palpage (2) prend appui sur la règle graduée (1) par l'intermédiaire d'éléments de guidage (25).

9. Dispositif de mesure de position selon la revendication 8, **caractérisé en ce que** la règle graduée (1) et l'unité de palpage (2) sont disposées à l'intérieur d'un boîtier (8), la cavité du boîtier (8) formant la chambre extérieure (AR) de l'unité de palpage (2).

10. Dispositif de mesure de position selon la revendication 9, **caractérisé en ce que** le boîtier (8) peut être fixé à l'un des objets (9) à mesurer et présente une ouverture qui est fermée par des éléments d'étanchéité (10) élastiques au travers desquels passe un entraîneur (11) pour l'unité de palpage (2), l'entraîneur (11) pouvant être lié à l'autre objet (9) à mesurer.
